# EUROPÄISCHE PATENTSCHRIFT

(11) **EP 4 001 182 B1**
(45) Veröffentlichungstag und Bekanntmachung des Hinweises auf die Patenterteilung: **14.08.2024**
(21) Anmeldenummer: 20208124.6
(22) Anmeldetag: 17.11.2020
(51) Int. Cl.: B65G 21/20

(54) **VERPACKUNGSMASCHINE SOWIE VORRICHTUNG UND VERFAHREN ZUM TRASSIEREN EINER TRANSPORTSTRECKE EINER VERPACKUNGSMASCHINE**
PACKAGING MACHINE AND DEVICE AND METHOD FOR TRACING A TRANSPORT ROUTE OF A PACKAGING MACHINE
MACHINE D'EMBALLAGE AINSI QUE DISPOSITIF ET PROCÉDÉ DE TRAÇAGE D'UN TRAJET DE TRANSPORT D'UNE MACHINE D'EMBALLAGE

(43) Veröffentlichungstag der Anmeldung: 25.05.2022
(73) Patentinhaber: Illinois Tool Works INC., Glenview, IL 60025 (US)
(72) Erfinder: KORTE, Hartmut, 49565 Bramsche (DE)
(74) Vertreter: Meissner Bolte Partnerschaft mbB

(56) Entgegenhaltungen:
- DE-A1- 102015 006 979
- GB-A- 1 372 455
- US-A- 3 038 584
- US-A1- 2013 075 236
- US-A1- 2020 079 593
- US-B1- 6 287 045
- US-B1- 6 378 695

## Beschreibung

Die vorliegende Erfindung betrifft eine Verpackungsmaschine zum Verpacken und/oder Verarbeiten von Gegenständen.

Insbesondere betrifft die Erfindung vorzugsweise (aber nicht ausschließlich) sog. Sekundär-Verpackungsmaschinen, welche ausgebildet sind, Verpackungen, insbesondere Großpackungen (Gebinde) herzustellen, und zwar indem die Gegenstände, insbesondere bereits verpackte Produkte, welche zu einem Gebinde zusammengestellt sind, in Kartonmaterial und/oder Folienmaterial eingeschlagen werden.

Die Druckschrift US 2013/0075236 A1 betrifft ein Führungssystem zum Führen von Behältern in vorab festgelegten Positionen auf einem Förderband.

Die Druckschrift US 6,287,045 B1 betrifft eine verstellbar ausgeführte Führungsschiene.

Die Druckschrift US 3,038,584 A betrifft eine Verpackungsmaschine nach dem Oberbegriff des unabhängigen Patentanspruchs 1.

Die Druckschrift US 2020/0079593 A1 betrifft eine weitere Vorrichtung zum Führen von Produkten entlang eines Förderers in einer Förderrichtung.

Die Druckschrift DE 10 2015 006 979 A1 betrifft eine hydro-mechanisch einstellbare Seitenführung zum Fördern von Produkten.

Die Druckschrift GB 1 372 455 A betrifft ein Führungssystem zum Führen von Produkten über einen Kanten- oder Kurvenbereich.

Die Druckschrift US 6,378,695 B1 betrifft ein Fördersystem mit bewegbaren Führungsschienen.

Der hierin verwendete Begriff "Verpackungsmaschine" umfasst auch den Begriff "Gruppiereinrichtung" an sich bzw. einen Bestandteil einer größeren Anlage. Die Verpackungsmaschinen sind beispielsweise Bestandteil einer Abfülllinie, die im Allgemeinen innerhalb einer Produktionshalle angeordnet ist.

Einzeln verpackte Produkte, wie beispielsweise in Kartons eingefüllte Getränke oder in Tüten verpacktes Mehl oder dergleichen, werden zum besseren Transport anschließend zu größeren Gebinden zusammengefasst. Hierzu werden die Produkte in einer Verpackungsmaschine zusammengefördert und durch entsprechende Steuerung der Förder- oder Transportbänder zu Gruppen gewünschter Größe zusammengefasst. Ein solches Gebinde kann dann beispielsweise durch Einfüllen mehrerer Produkte in eine Verpackung aus Karton oder durch Einwickeln in Folie erfolgen, die anschließend geschrumpft wird, so dass das Gebinde stabil ist.

Für die Verarbeitung, Zusammenstellung, Gruppierung und Verpackung von Gegenständen kommen insbesondere unterschiedliche Verpackungsmaschinen oder Verpackungsstationen zum Einsatz, die über eine entsprechende Transportstrecke miteinander verbunden sind, um die Produkte, Gebinde und/oder Verpackungseinheiten entsprechend ab- oder zuzuführen. Die Transportstrecke dient dabei zum Fördern der Produkte, Gebinde und/oder Verpackungseinheiten in einer vorzugsweise horizontalen Transportrichtung, wobei die Transportrichtung häufig nicht geradlinig verläuft, sondern Kurvenbereiche, kurvenförmige oder bogenförmige Bereiche aufweist. Die Transportstrecke weist eine Fördereinrichtung insbesondere in Gestalt eines Transport- oder Förderbands mit vorzugsweise mindestens einem Antriebsmittel zum Antreiben der Fördereinrichtung auf. Allerdings ist es nicht zwingend erforderlich, dass der Fördereinrichtung (insbesondere also dem Transport- oder Förderband) ein Antriebsmittel zugeordnet ist.

Bei der Auslegung und Planung der Verpackungsmaschine ist die Transportstrecke entsprechend zu trassieren. Der Begriff "Trassierung" beschreibt das Entwerfen und Festlegen der Linienführung der Transportstrecke insbesondere in Lage und Querschnitt.

Die Transportstrecke ist vorzugsweise insbesondere so zu trassieren, dass ein geradliniger Bereich der Transportstrecke möglichst "sanft" in einen kurven- oder bogenförmigen Bereich der Transportstrecke übergeht, um beim Transport der Produkte, Gebinde und/oder Verpackungseinheiten einen möglichst ruckfreien Übergang zwischen dem geradlinigen Bereich und dem kurven- oder bogenförmigen Bereich der Transportstrecke zu ermöglichen. Von daher sind im Übergangsbereich zwischen einem geradlinigen Abschnitt der Transportstrecke und einem bogen- oder kurvenförmigen Bereich der Transportstrecke entsprechende Übergangsbögen insbesondere in Gestalt von Kurvenführungen vorzusehen.

Hierbei ist jedoch zu berücksichtigen, dass die Bogenform der Kurvenführung auch von den zu fördernden Produkten, Gebinden und/oder Verpackungseinheiten und insbesondere deren Größe und Formgebung abhängt. Dies erschwert eine optimale Trassierung der Transportstrecke einer Verpackungsmaschine bereits in der Konstruktions- oder Planungsphase. Von daher werden in der Regel die seitlichen Führungen und insbesondere die seitlichen Kurvenführungen einer Transportstrecke einer Verpackungsmaschine erst nach Inbetriebnahme der Verpackungsmaschine bzw. bei der Erstinbetriebnahme der Verpackungsmaschine eingestellt.

Hierbei ist zu berücksichtigen, dass in der Regel die Transportstrecke ferner zu modifizieren ist, wenn nach Inbetriebnahme der Verpackungsmaschine ein Produktwechsel stattfindet. Die damit einhergehende Anpassung und Einstellung der seitlichen Führungen und insbesondere Kurvenführungen der Transportstrecke ist relativ zeitaufwändig und oftmals ist eine optimale Anpassung der seitlichen Führung bzw. Kurvenführung an die zu transportierenden Produkte, Gebinde und/ oder Verpackungseinheiten nicht möglich.

Auf Grundlage dieser Problemstellung liegt der Erfindung die Aufgabe zugrunde, eine Lösung anzugeben, mit welcher in einer besonders einfachen aber effektiven Weise auch nachträglich, d.h. nach Inbetriebnahme der Verpackungsanlage, die Transportstrecke möglichst optimal trassiert werden kann.

Diese Aufgabe wird insbesondere durch den Gegenstand des unabhängigen Patentanspruchs 1 und/oder durch den Gegenstand des unabhängigen Patentanspruchs 7 gelöst.

Demgemäß betrifft die Erfindung eine Verpackungsmaschine gemäß Anspruch 1 zum Verpacken und/oder Verarbeiten von Gegenständen mit einer Transportstrecke zum Fördern von Produkten, Gebinden und/oder Verpackungseinheiten in einer Transportrichtung, wobei die Transportstrecke eine Fördereinrichtung insbesondere in Gestalt eines Transport- oder Förderbands mit vorzugsweise mindestens einem Antriebsmittel aufweist.

Gemäß der Erfindung ist dabei vorgesehen, dass insbesondere zur Trassierung der Transportstrecke zumindest bereichs- oder abschnittsweise eine senkrecht zur Transportrichtung gesehene, zur Förderung der Produkte, Gebinde und/oder Verpackungseinheiten effektive Breite der

Fördereinrichtung insbesondere zumindest über einen vorab festgelegten oder festlegbaren Bereich vorzugsweise variabel einstellbar ist.

Alternativ oder zusätzlich hierzu ist insbesondere vorgesehen, dass die Transportstrecke vorzugsweise zumindest im Wesentlichen horizontal verläuft, wobei die Transportstrecke mindestens einen Kurvenbereich oder mindestens einen gekrümmten oder bogenförmigen Bereich aufweist, durch welchen die Produkte, Gebinde und/oder Verpackungseinheiten in horizontaler Richtung ab- und/oder umgelenkt werden. Insbesondere zur Trassierung der Transportstrecke ist hierbei vorgesehen, dass zumindest bereichs- oder abschnittsweise eine Längsneigung, eine Krümmung und/oder eine Krümmungsänderung des mindestens einen Kurvenbereichs oder des mindestens einen gekrümmten oder bogenförmigen Bereichs der Transportstrecke insbesondere zumindest über einen vorab festgelegten oder festlegbaren Bereich vorzugsweise variabel einstellbar sind/ist.

Die mit der erfindungsgemäßen Lösung erzielbaren Vorteile liegen auf der Hand: dadurch, dass wahl- oder bedarfsweise zumindest bereichs- oder abschnittsweise eine senkrecht zur Transportrichtung gesehene, zur Förderung der Produkte, Gebinde und/oder Verpackungseinheiten effektive Breite der Fördereinrichtung vorzugsweise variabel einstellbar ist, ist die Transportstrecke in einfacher Weise flexibel und insbesondere optimal an die jeweiligen Eigenschaften und insbesondere Größen der zur Förderung vorgesehenen Produkte, Gebinde und/oder Verpackungseinheiten anpassbar. Dies betrifft zum einen einen geradlinigen Bereich der Transportstrecke.

Um zusätzlich auch eine Kurvenführung der Transportstrecke optimal an die Eigenschaften und insbesondere Größen der zu fördernden Produkte, Gebinde und/oder Verpackungseinheiten anpassen zu können, ist gemäß einem Aspekt der Erfindung vorgesehen, dass zumindest bereichs- oder abschnittsweise eine Längsneigung, eine Krümmung und/oder eine Krümmungsänderung des mindestens einen Kurvenbereichs oder des mindestens einen gekrümmten oder bogenförmigen Bereichs der Transportstrecke insbesondere zumindest über einen vorab festgelegten oder festlegbaren Bereich vorzugsweise variabel einstellbar sind/ist.

Auf diese Weise ist somit sichergestellt, dass auch nach einem Produktwechsel in einer einfachen Weise die Transportstrecke optimal trassiert ist oder trassiert werden kann, und dass insbesondere ein störungsfreier Transport bzw. eine störungsfreie Förderung der Produkte, Gebinde und/oder Verpackungseinheiten gewährleistet ist, wobei die hierfür erforderliche Trassierung, d.h. Anpassung der Transportstrecke insbesondere an die zu fördernden Produkte, Gebinde und/oder Verpackungseinheiten in einer leicht zu realisierende aber dennoch effektiven Weise ermöglicht ist.

Bei der erfindungsgemäßen Verpackungsmaschine ist vorgesehen, dass der Transportstrecke mindestens ein seitliches Führungselement insbesondere in Gestalt einer Führungsschiene oder Führungsleiste zugeordnet ist, welches zumindest relativ zu der Fördereinrichtung, d.h. relativ zu dem Transport- oder Förderband, und senkrecht zur Transportrichtung verstellbar ist, um wahl- oder bedarfsweise die zur Förderung der Produkte, Gebinde und/oder Verpackungseinheiten effektive Breite der Fördereinrichtung variieren und einstellen zu können.

Ferner ist gemäß der Erfindung vorgesehen, dass das mindestens eine seitliche Führungselement einen vorzugsweise biegesteifen ersten Bereich aufweist, in welchem das seitliche Führungselement zumindest im Wesentlichen geradlinig verläuft und dort als Seitenführung dient.

Ferner weist das mindestens eine seitliche Führungselement einen weiteren, zweiten Bereich auf, in welchem das seitliche Führungselement bogenförmig verläuft, wobei der zweite Bereich des seitlichen Führungselements zumindest bereichsweise aus einem derart flexiblen Material, insbesondere Kunststoffmaterial, gebildet ist, dass zumindest bereichs- oder abschnittsweise eine Krümmung und/oder Krümmungsänderung (Gradient) der Bogenform des zweiten Bereichs vorzugsweise reversibel und insbesondere zumindest über einen vorab festgelegten oder festlegbaren Bereich variabel einstellbar ist.

Unter dem hierin verwendeten Begriff "biegesteif" ist das Verhalten des ersten Bereichs des seitlichen Führungselements unter der im Gebrauch üblichen Belastung zu verstehen. Insbesondere soll damit verstanden werden, dass eine Durchbiegung oder Verbiegung des seitlichen Führungselements im Gebrauch der Verpackungsmaschine nicht erforderlich oder gewünscht ist, da der erste Bereich des seitlichen Führungselements als geradlinige Führung dient, also nicht als Kurvenführung in einem Kurvenbereich oder bogenförmigen Bereich der Transportstrecke.

Im Unterschied hierzu ist der zweite Bereich des seitlichen Führungselements entsprechend flexibel ausgebildet, so dass zumindest über einen vorab festgelegten oder festlegbaren Bereich die Krümmung und/oder Krümmungsänderung der Bogenform des zweiten Bereichs variabel einstellbar ist.

Als Material für den zweiten Bereich des seitlichen Führungselements bietet sich beispielsweise ein Kunststoffmaterial an, welches entsprechend flexible Eigenschaften aufweist. Für das Material des ersten Bereichs des seitlichen Führungselements ist Edelstahl bevorzugt.

Selbstverständlich kommen aber auch andere Materialien für den ersten und/oder zweiten Bereich des seitlichen Führungselements in Frage.

Gemäß der Erfindung ist zwischen dem ersten Bereich bzw. zwischen einem an den zweiten Bereich des mindestens einen seitlichen Führungselements angrenzenden Endbereich des ersten Bereichs und dem zweiten Bereich bzw. einem an den ersten Bereich des seitlichen Führungselements angrenzenden Endbereich des zweiten Bereichs ein Lager vorgesehen, um diese beiden Bereiche bzw. die entsprechenden Endbereiche miteinander mechanisch zu verbinden.

Gemäß der Erfindung ist vorgesehen, dass das Lager als Gleit- oder Linearlager ausgeführt und ausgebildet ist, zumindest bereichsweise eine geradlinige Bewegung zwischen dem Endbereich des ersten Bereichs des seitlichen Führungselements und einem Endbereich des zweiten Bereichs des seitlichen Führungselements in Längsrichtung des seitlichen Führungselements zu führen bzw. zu erlauben. Dieses als Gleit- oder Linearlager ausgeführte Lager weist bevorzugt nur einen einzigen Freiheitsgrad auf, nämlich in Längsrichtung des seitlichen Führungselements.

In diesem Zusammenhang ist gemäß der Erfindung ferner vorgesehen, dass dem Lager eine Arretiereinrichtung zugeordnet ist zum wahl- und/oder bedarfsweisen Blockieren einer Bewegung des Endbereichs des ersten Bereichs und des Endbereichs des zweiten Bereichs relativ zueinander. Eine derartige Arretiereinrichtung kann beispielsweise in Gestalt einer Klemme oder einer Schraube vorliegen.

Gemäß Weiterbildungen der vorliegenden Erfindung ist vorgesehen, dass das mindestens eine seitliche Führungselement einen vorzugsweise biegesteifen dritten Bereich aufweist, wobei der zweite Bereich des seitlichen Führungselements zwischen dem ersten und dem dritten Bereich des seitlichen Führungselements angeordnet ist.

Insbesondere (aber nicht ausschließlich) bei der zuletzt genannten Ausführungsform ist es bevorzugt, dass dem ersten und/oder dritten Bereich des seitlichen Führungselements mindestens eine Verstelleinrichtung zugeordnet sind/ist, über welche zumindest bereichs- oder abschnittsweise der erste und/oder dritte Bereich relativ zu der Fördereinrichtung und senkrecht zu der Transportrichtung gesehen verstellbar sind/ist. Auf diese Weise kann zumindest bereichs- oder abschnittsweise eine senkrecht zur Transportrichtung gesehene, zur Förderung der Produkte, Gebinde und/oder Verpackungseinheiten effektive Breite der Fördereinrichtung variabel eingestellt werden.

Darüber hinaus ist zumindest bereichs- oder abschnittsweise eine Längsneigung, eine Krümmung und/oder eine Krümmungsänderung eines Kurvenbereichs oder eines gekrümmten oder bogenförmigen Bereichs der Transportstrecke insbesondere zumindest über einen vorab festgelegten oder festlegbaren Bereich vorzugsweise variabel einstellbar.

Bei den zuletzt genannten Weiterbildungen der Erfindung, bei denen das seitliche Führungselement zusätzlich zu dem ersten und zweiten Bereich den dritten Bereich aufweist, kann ein Endbereich des dritten Bereichs mit einem Endbereich des zweiten Bereichs ebenfalls über ein Gleit- oder Linearlager verbunden sein. Vorzugsweise jedoch ist vorgesehen, dass ein Endbereich des zweiten Bereichs fest mit einem Endbereich des dritten Bereichs verbunden ist.

Gemäß bevorzugten Realisierungen der vorliegenden Erfindung sind der Transportstrecke der Verpackungsmaschine zwei einander gegenüberliegende, seitliche Führungselemente der zuvor beschriebenen Art zugeordnet, welche zumindest bereichsweise insbesondere unabhängig voneinander relativ zu der Fördereinrichtung und senkrecht zur Transportrichtung verstellbar sind, um so eine zum Fördern der Produkte, Gebinde und/oder Verpackungseinheiten effektive Breite der Fördereinrichtung zu variieren und/oder um eine Krümmung, eine Krümmungsänderung bzw. Form eines Kurvenbereichs der Transportstrecke zu variieren.

Es wird auch eine Vorrichtung zum Trassieren einer Transportstrecke einer Verpackungsmaschine beschrieben, wobei die Transportstrecke eine Fördereinrichtung insbesondere in Gestalt eines Transport- oder Förderbands aufweist zum Fördern von Produkten, Gebinden und/oder Verpackungseinheiten in einer Transportrichtung. Dabei weist die Trassiervorrichtung mindestens ein seitliches Führungselement insbesondere in Gestalt einer Führungsschiene oder Führungsleiste auf.

Dieses seitliche Führungselement ist zumindest bereichs- oder abschnittsweise relativ zu der Fördereinrichtung senkrecht zur Transportrichtung verstellbar, um eine zur Förderung der Produkte, Gebinde und/oder Verpackungseinheiten effektive Breite der Fördereinrichtung zu variieren.

Vorzugsweise weist die Trassiervorrichtung zwei einander gegenüberliegende, seitliche Führungselemente auf, welche die Transportstrecke der Verpackungsmaschine seitlich begrenzen, und welche zumindest bereichsweise insbesondere unabhängig voneinander relativ zu der Fördereinrichtung und senkrecht zur Transportrichtung verstellbar sind, um die zur Förderung der Produkte, Gebinde und/oder Verpackungseinheiten effektive Breite der Fördereinrichtung bedarfsweise oder wahlweise variieren zu können.

Das mindestens eine seitliche Führungselement bzw. die beiden seitlichen Führungselemente der Trassiervorrichtung weist bzw. weisen jeweils einen vorzugsweise biegesteifen ersten Bereich auf, in welchem das seitliche Führungselement zumindest im Wesentlichen geradlinig verläuft. Das entsprechende seitliche Führungselement weist ferner einen zweiten Bereich auf, in welchem das seitliche Führungselement bogenförmig verläuft und dort als Kurvenführung dient. Der zweite Bereich des seitlichen Führungselements ist zumindest bereichsweise aus einem derart flexiblen Material gebildet, dass zumindest bereichs- oder abschnittsweise eine Krümmung und/oder Krümmungsänderung der Bogenform des zweiten Bereichs vorzugsweise reversibel und insbesondere zumindest über einen vorab festgelegten oder festlegbaren Bereich variabel einstellbar ist.

Insbesondere ist in diesem Zusammenhang vorgesehen, dass ein ersten Endbereich des ersten Bereichs des seitlichen Führungselements mit einem Endbereich des zweiten Bereichs des zweiten Führungselements derart mechanisch verbunden ist, dass diese beiden Endbereiche relativ zueinander in Längsrichtung des seitlichen Führungselements bewegbar sind.

Gemäß bevorzugten Weiterbildungen der Trassiervorrichtung weist das mindestens eine seitliche Führungselement einen vorzugsweise biegesteifen dritten Bereich auf, wobei der zweite Bereich des seitlichen Führungselements zwischen dem ersten und dem dritten Bereich des seitlichen Führungselements angeordnet ist.

Hierbei ist es bevorzugt, dass dem ersten und vorzugsweise ferner dem dritten Bereich des seitlichen Führungselements mindestens eine Verstelleinrichtung zugeordnet ist, über welche zumindest bereichs- oder abschnittsweise der erste und vorzugsweise auch dritte Bereich des seitlichen Führungselements relativ zu der Fördereinrichtung und senkrecht zu der Transportrichtung gesehen verstellbar sind.

Auf diese Weise ist nicht nur die Krümmung, Bogenform und Krümmungsänderung des kurvenförmigen Bereichs der Transportstrecke einstellbar, sondern auch ein besonders sanfter Übergang von den geradlinigen Bereichen, welche der erste und dritte Bereich des seitlichen Führungselements bildet, zu dem zweiten, bogenförmigen Bereich.

Die Erfindung betrifft ferner ein Verfahren gemäß Anspruch 7 zum Trassieren einer Transportstrecke einer Verpackungsmaschine, wobei die Transportstrecke eine Fördereinrichtung insbesondere in Gestalt eines Transport- oder Förderbands aufweist, um Produkte, Gebinde und/oder Verpackungseinheiten in einer Transportrichtung, vorzugsweise in einer horizontal verlaufenden Transportrichtung, zu transportieren/zu fördern.

Bei dem Trassierverfahren wird die zuvor beschriebene erfindungsgemäße Trassiervorrichtung verwendet, um die einzelnen Bereiche der Transportstrecke in optimaler Weise festzulegen. Dabei ist insbesondere vorgesehen, dass zumindest bereichs- oder abschnittsweise der erste und/oder dritte Bereich des mindesten einen seitlichen Führungselements der Trassiervorrichtung relativ zu der Fördereinrichtung und senkrecht zu der Transportrichtung gesehen derart verstellt werden/wird, dass zumindest bereichs- oder abschnittsweise eine Längsneigung, eine Krümmung und/oder eine Krümmungsänderung mindestens eines Kurvenbereichs oder mindestens eines gekrümmten oder bogenförmigen Bereichs der Transportstrecke und/oder zumindest bereichs- oder abschnittsweise eine senkrecht zur Transportrichtung gesehene, zur Förderung der Produkte, Gebinde und/oder Verpackungseinheiten effektive Breite der Fördereinrichtung eingestellt werden/wird.

Nachfolgend wird unter Bezugnahme auf die beiliegende Zeichnung eine exemplarische Ausführungsform der Trassiervorrichtung beschrieben.

Es zeigt:

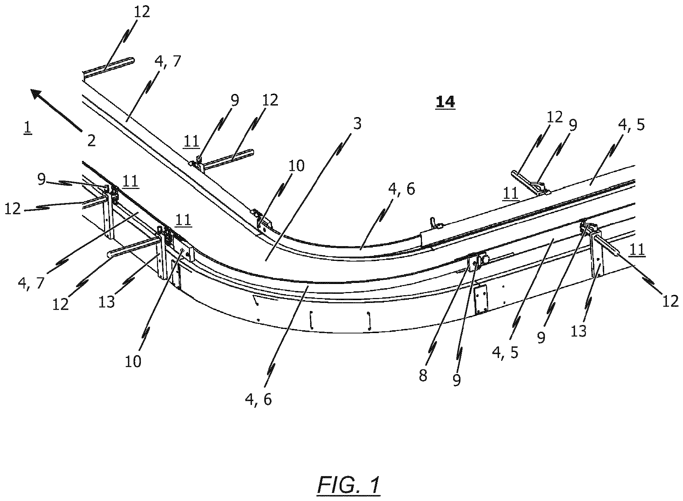

- FIG. 1: schematisch und in einer isometrischen Ansicht einen Bereich einer Transportstrecke einer Verpackungsmaschine mit einer exemplarischen Ausführungsform der Trassiervorrichtung.

FIG. 1 zeigt schematisch und in einer isometrischen Ansicht einen Teilbereich einer Transportstrecke 1 einer Verpackungsmaschine oder Verpackungsanlage, die zum Verpacken und/oder Verarbeiten von Gegenständen dient. Mit der Transportstrecke 1 werden Produkte, Gebinde und/oder Verpackungseinheiten in einer in FIG. 1 mit dem Pfeil angedeuteten Transportrichtung 2 transportiert bzw. gefördert.

Wie es der Darstellung in FIG. 1 entnommen werden kann, weist der dort gezeigte Abschnitt der Transportstrecke 1 einen - in Transportrichtung 2 bzw. Förderrichtung gesehen - stromaufwärtigen geradlinigen Bereich, und einen - ebenfalls in Transport- bzw. Förderrichtung 2 gesehen - stromabwärtigen geradlinigen Bereich auf, wobei diese beiden geradlinigen Bereiche der Transportstrecke 1 über einen entsprechenden Kurvenbereich bzw. gekrümmten oder bogenförmigen Bereich miteinander verbunden sind.

Insbesondere solch ein Kurvenbereich bzw. gekrümmter oder bogenförmiger Bereich der Transportstrecke 1 ist bei Inbetriebnahme der Verpackungsmaschine bzw. Verpackungsanlage oder bei einem Produktwechsel an die Eigenschaften und/oder an die Größe der zu fördernden Produkte, Gebinde und/oder Verpackungseinheiten anzupassen. Insbesondere ist Sorge zu tragen, dass beim Transport der Produkte, Gebinde und/oder Verpackungseinheiten durch den Kurvenbereich bzw. den gekrümmten oder bogenförmigen Bereich der Transportstrecke 1 diese in einer "sanften" Weise geführt werden, um Störungen bei der Förderung der Produkte und/oder Beschädigungen der Produkte zu vermeiden.

Hierbei ist ein besonderes Augenmerk auf insbesondere den Übergang des Kurvenbereichs bzw. gekrümmten oder bogenförmigen Bereichs zu den geradlinigen Bereichen zu richten. Bevorzugt ist in diesem Zusammenhang insbesondere, dass der Übergangsbereich klothoidförmig ausgeführt ist um eine stetige, ruckfreie Krümmungsänderung zwischen dem geradlinigen Bereich und dem kreisförmigen bzw. gekrümmten Bereich der Transportstrecke 1 zu gewährleisten.

Die in FIG. 1 abschnittsweise gezeigte Transportstrecke 1 weist eine Fördereinrichtung 3 in Gestalt eines Transport- oder Förderbands, insbesondere in Gestalt eines Endlos-Transport- oder Förderbands auf, wobei der Fördereinrichtung 3 ein in FIG. 1 nicht gezeigtes Antriebsmittel zum Antreiben der Fördereinrichtung 3 zugeordnet sein kann.

Um die Transportstrecke 1 insbesondere bei einer Erst-Inbetriebnahme oder bei einem Produktwechsel an die Größe und/oder Eigenschaften der zu fördernden Produkte/Gebinde/Verpackungseinheiten anpassen zu können, kommt bei der in FIG. 1 abschnittsweise gezeigten Transportstrecke 1 eine entsprechende Trassiervorrichtung 14 zum Einsatz.

Die Trassiervorrichtung 14 weist zwei einander gegenüberliegende seitliche Führungselemente 4 auf, die jeweils zumindest bereichsweise als Führungsschiene oder Führungsleiste ausgebildet sind. Die beiden seitlichen Führungselemente 4 begrenzen in horizontaler Hinsicht die zur Förderung der Produkte, Gebinde und/oder Verpackungseinheiten effektive Breite der Fördereinrichtung 3. Mit anderen Worten, die seitlichen Führungselemente 4 dienen als seitliche Führungsleisten.

Dabei ist insbesondere vorgesehen, dass jedes seitliche Führungselement 4 in verschiedene Bereiche aufgeteilt ist.

Im Einzelnen ist bei der in FIG. 1 schematisch dargestellten Ausführungsform der Trassiervorrichtung 14 vorgesehen, dass jedes seitliche Führungselement 4 einen ersten geradlinig verlaufenden Bereich 5, einen mit dem ersten (geradlinig verlaufenden) Bereich 5 verbundenen zweiten gekrümmten Bereich 6 und einen sich an den zweiten (gekrümmten) Bereich 6 anschließenden dritten geradlinig verlaufenden Bereich 7 aufweist.

Der erst und dritte (geradlinig verlaufende) Bereich 5, 7 der beiden seitlichen Führungselemente 4 ist vorzugsweise aus einem biegesteifen Material, insbesondere Edelstahl gebildet und dient als seitliche Linearführung für die geradlinigen Abschnitte der Transportstrecke 1. Hingegen ist der mittlere, zweite Bereich 6 der jeweiligen seitlichen Führungselemente 4 flexibel ausgebildet und insbesondere kurvenförmig ausgebildet. Durch die flexible Eigenschaft des Materials des zweiten Bereichs 6 des seitlichen Führungselements 4 ist eine Krümmung, ein Krümmungsverlauf und eine Krümmungsänderung des zweiten Bereichs variabel einstellbar.

Beispielsweise kann der zweite, bogenförmige Bereich 6 der seitlichen Führungselemente 4 aus einem entsprechend flexiblen Kunststoffmaterial gebildet sein. Alternativ hierzu ist es aber auch denkbar, als zweiten (bogenförmigen) Bereich 6 der seitlichen Führungselemente 4 eine Gliederkette aus einzelnen biegesteifen Gliedern zu verwende, die relativ zueinander insbesondere um eine vertikale Achse jeweils miteinander verschwenkbar verbunden sind.

Wie in FIG. 1 angedeutet, ist mit Hilfe der beiden seitlichen Führungselemente 4 zumindest bereichs- oder abschnittsweise eine senkrecht zur Transportrichtung 2 gesehene, zur Förderung der Produkte, Gebinde und/oder Verpackungseinheiten effektive Breite der Fördereinrichtung 3 vorzugsweise variabel einstellbar. Dies gilt gleichwohl im Hinblick auf eine Krümmung und/oder im Hinblick auf eine Krümmungsänderung der beiden seitlichen Führungselemente 4 im Kurvenbereich bzw. bogenförmigen Bereich der Transportstrecke 1.

Im Einzelnen ist bei der in FIG. 1 schematisch dargestellten Ausführungsform der Trassiervorrichtung 14 vorgesehen, dass jeweils der erste und dritte Bereich 5, 7 der beiden seitlichen Führungselemente 4 relativ zu der Fördereinrichtung 3 und senkrecht zu der Transportrichtung 2 gesehen verstellbar sind.

Insbesondere ist in diesem Zusammenhang vorgesehen, dass zum einen der erste und dritte Bereich 5, 7 eines jeden einzelnen seitlichen Führungselements 4 unabhängig voneinander relativ zu der Fördereinrichtung 3 und senkrecht zu der Transportrichtung 2 gesehen verstellbar ist.

Zum anderen ist vorgesehen, dass die jeweiligen Bereiche (erste und dritte Bereiche 5, 7) der beiden seitlichen Führungselemente 4 auch unabhängig voneinander relativ zu der Fördereinrichtung 3 und senkrecht zu der Transportrichtung 2 gesehen verstellbar sind.

Hierzu ist bei der in FIG. 1 schematisch dargestellten Ausführungsform der Trassiervorrichtung 14 vorgesehen, dass dem ersten und dritten Bereich 5, 7 der beiden seitlichen Führungselemente 4 jeweils eine entsprechende Verstelleinrichtung 11 zugeordnet ist, mit welcher zumindest bereichs- oder abschnittsweise der entsprechende Bereich 5, 7 des jeweiligen seitlichen Führungselements 4 relativ zu der Fördereinrichtung 3 und senkrecht zu der Transportrichtung 2 gesehen verstellbar und einstellbar ist.

Beispielsweise können - wie in FIG. 1 angedeutet - die jeweiligen Verstelleinrichtungen 11 einen in horizontaler Richtung verstellbaren Einstellstempel 12 aufweisen, der mit einem Bereich des ersten bzw. dritten Bereichs 5, 7 des entsprechenden seitlichen Führungselements 4 verbunden ist, und der in Richtung der Fördereinrichtung 3, d.h. senkrecht zur Transportrichtung 2, ein- bzw. ausfahrbar ist, um so den Bereich des ersten bzw. dritten Bereichs 5, 7 des entsprechenden seitlichen Führungselements 4 geeignet zu positionieren.

Der entsprechende Stempel 12 der Verstelleinrichtung 11 kann dabei über eine Halterung 13 geeignet gelagert sein. Darüber hinaus bietet es sich an, dass dem entsprechenden Stempel 12 eine Arretiereinrichtung 9 insbesondere in Gestalt einer Feststellschraube zugeordnet ist, um eine eingestellte Position des Stempels 12 wahl- oder bedarfsweise zu fixieren.

An dieser Stelle sei darauf hingewiesen, dass anstelle einer manuellen Verstellung der entsprechenden Bereiche 5, 7 der seitlichen Führungselemente 4 auch eine motorische, insbesondere elektromotorische Verstellung mit Hilfe beispielsweise mindestens eines geeigneten Schrittmotors etc. denkbar ist.

Bei dem Ausführungsbeispiel in FIG. 1 ist vorgesehen, dass ein dem dritten Bereich 7 des seitlichen Führungselements 4 zugewandter Endbereich des zweiten Bereichs 6 des seitlichen Führungselements 4 fest (beispielsweise mit Hilfe einer Bolzen- oder Schraubverbindung 10) mit dem entsprechenden dem zweiten Bereich 6 des seitlichen Führungselements 4 zugewandten Endbereich des dritten Bereichs 7 verbunden ist.

Ferner ist bei der dargestellten Ausführungsform der Trassiervorrichtung 14 vorgesehen, dass der dem ersten Bereich 5 des seitlichen Führungselements 4 zugewandte Endbereich des zweiten Bereichs 6 des seitlichen Führungselements 4 über ein Lager 8 mit dem dem zweiten Bereich 6 des seitlichen Führungselements 4 zugewandten Endbereich des ersten Bereichs 5 des seitlichen Führungselements 4 verbunden ist.

Bei diesem Lager 8 handelt es sich insbesondere um ein Gleit- oder Linearlager, welches ausgebildet ist, zumindest bereichsweise eine geradlinige Bewegung zwischen dem Endbereich des ersten Bereichs 5 und dem Endbereich des zweiten Bereichs 6 des seitlichen Führungselements 4 in Längsrichtung des seitlichen Führungselements 4 zu führen.

Es kommt ferner eine Arretiereinrichtung 9 zum Einsatz, die dem Lager 8 zugeordnet ist, und die dazu dient, wahl- oder bedarfsweise eine Bewegung des Endbereichs des ersten Bereichs 5 und des Endbereichs des zweiten Bereichs 6 relativ zueinander zu blockieren.

Zusammenfassend bleibt festzuhalten, dass mit der Trassiervorrichtung 14 in einer einfach zu realisierenden aber dennoch effektiven Weise eine Transportstrecke 1 und insbesondere ein kurvenförmiger Bereich einer Transportstrecke 1 an die Größe und/oder Eigenschaften der zu transportierenden Produkte angepasst werden kann.

### Bezugszeichenliste

- 1: Transportstrecke
- 2: Transportrichtung
- 3: Fördereinrichtung
- 4: seitliches Führungselement
- 5: erster Bereich des seitlichen Führungselements
- 6: zweiter Bereich des seitlichen Führungselements
- 7: dritter Bereich des seitlichen Führungselements
- 8: Lager
- 9: Arretiereinrichtung des Lagers
- 10: Bolzen-/Schraubverbindung
- 11: Verstelleinrichtung
- 12: horizontaler Stempel der Verstelleinrichtung
- 13: Halterung der Verstelleinrichtung
- 14: Trassiervorrichtung

## Patentansprüche

1. Verpackungsmaschine zum Verpacken und/oder Verarbeiten von Gegenständen mit einer Transportstrecke (1) zum Fördern von Produkten, Gebinden und/oder Verpackungseinheiten in einer Transportrichtung (2), wobei die Transportstrecke (1) eine Fördereinrichtung (3) insbesondere in Gestalt eines Förderbands mit vorzugsweise mindestens einem Antriebsmittel aufweist, wobei insbesondere zur Trassierung der Transportstrecke (1) zumindest bereichs- oder abschnittsweise eine senkrecht zur Transportrichtung (2) gesehene, zur Förderung der Produkte, Gebinde und/oder Verpackungseinheiten effektive Breite der Fördereinrichtung (3) insbesondere zumindest über einen vorab festgelegten oder festlegbaren Bereich vorzugsweise variabel einstellbar ist, wobei der Transportstrecke (1) mindestens ein seitliches Führungselement (4) insbesondere in Gestalt einer Führungsschiene oder Führungsleiste zugeordnet ist, welches zumindest bereichsweise relativ zu der Fördereinrichtung (3) und senkrecht zur Transportrichtung (2) verstellbar ist zum Variieren der zur Förderung der Produkte, Gebinde und/oder Verpackungseinheiten effektiven Breite der Fördereinrichtung (3), wobei das mindestens eine seitliche Führungselement (4) einen vorzugsweise biegesteifen ersten Bereich (5) aufweist, in welchem das seitliche Führungselement (4) zumindest im Wesentlichen geradlinig verläuft, und einen zweiten Bereich (6) aufweist, in welchem das seitliche Führungselement (4) bogenförmig verläuft, wobei der zweite Bereich (6) des seitlichen Führungselements (4) zumindest bereichsweise aus einem derart flexiblen Material, insbesondere Kunststoffmaterial, gebildet ist, das zumindest bereichs- oder abschnittsweise eine Krümmung und/oder Krümmungsänderung der Bogenform des zweiten Bereichs (6) des seitlichen Führungselements (4) vorzugsweise reversibel und insbesondere zumindest über einen vorab festgelegten oder festlegbaren Bereich variabel einstellbar ist,
wobei zwischen dem ersten Bereich (5) und dem zweiten Bereich (6) des mindestens einen seitlichen Führungselements (4) ein Lager (8) vorgesehen ist zum mechanischen Verbinden der beiden Bereiche (5, 6), **dadurch gekennzeichnet, dass** das Lager (8) als Gleit- oder Linearlager ausgeführt und ausgebildet ist, zumindest bereichsweise eine geradlinige Bewegung zwischen einem Endbereich des ersten Bereichs (5) und einem Endbereich des zweiten Bereichs (6) des seitlichen Führungselements (4) in Längsrichtung des seitlichen Führungselements (4) zu führen, und wobei dem Lager (8) eine Arretiereinrichtung (9) zugeordnet ist zum wahl- und/oder bedarfsweisen Blockieren einer Bewegung des Endbereichs des ersten Bereichs (5) und des Endbereichs des zweiten Bereichs (6) relativ zu einander.

2. Verpackungsmaschine nach Anspruch 1,
wobei die Transportstrecke (1) vorzugsweise zumindest im Wesentlichen horizontal verläuft und wobei die Transportstrecke (1) mindestens einen Kurvenbereich oder mindestens einen gekrümmten oder bogenförmigen Bereich aufweist, durch den die Produkte, Gebinde und/oder Verpackungseinheiten in horizontaler Richtung ab- und/oder umgelenkt werden, wobei insbesondere zur Trassierung der Transportstrecke (1) zumindest bereichs- oder abschnittsweise eine Längsneigung, eine Krümmung und/oder eine Krümmungsänderung des mindestens einen Kurvenbereichs oder des mindestens einen gekrümmten oder bogenförmigen Bereichs der Transportstrecke (1) insbesondere zumindest über einen vorab festgelegten oder festlegbaren Bereich vorzugsweise variabel einstellbar sind/ist.

3. Verpackungsmaschine nach Anspruch 1 oder 2,
wobei das mindestens eine seitliche Führungselement (4) einen vorzugsweise biegesteifen dritten Bereich (7) aufweist, wobei der zweite Bereich (6) des seitlichen Führungselements (4) zwischen dem ersten und dem dritten Bereich (5, 7) des seitlichen Führungselements (4) angeordnet ist.

4. Verpackungsmaschine nach einem der Ansprüche 1 bis 3 und insbesondere nach Anspruch 3, wobei dem ersten und/oder dritten Bereich (5, 7) des seitlichen Führungselements (4) mindestens eine Verstelleinrichtung (11) zugeordnet sind/ist, über welche zumindest bereichs- oder abschnittsweise der erst und/oder dritte Bereich (5, 7) relativ zu der Fördereinrichtung (3) und senkrecht zu der Transportrichtung (2) gesehen verstellbar sind/ist.

5. Verpackungsmaschine nach Anspruch 3 oder 4,
wobei ein Endbereich des zweiten Bereichs (6) fest mit einem Endbereich des dritten Bereichs (7) verbunden ist.

6. Verpackungsmaschine nach einem der Ansprüche 1 bis 5,
wobei der Transportstrecke (1) zwei einander gegenüberliegende, seitliche Führungselemente (4) zugeordnet sind, welche zumindest bereichsweise insbesondere unabhängig voneinander relativ zu der Fördereinrichtung (3) und senkrecht zur Transportrichtung (2) verstellbar sind zum Variieren der zur Förderung der Produkte, Gebinde und/oder Verpackungseinheiten effektiven Breite der Fördereinrichtung (3).

7. Verfahren zum Trassieren einer Transportstrecke (1) einer Verpackungsmaschine nach einem der Ansprüche 1 bis 6, wobei das Verfahren die folgenden Verfahrensschritte aufweist:
- Bereitstellen einer Vorrichtung (14) zum Trassieren einer Transportstrecke (1) einer Verpackungsmaschine, wobei die Transportstrecke (1) eine Fördereinrichtung (3) insbesondere in Gestalt eines Förderbands zum Fördern von Produkten, Gebinden und/oder Verpackungseinheiten in einer Transportrichtung (2) aufweist, und wobei die Vorrichtung (14) mindestens ein seitliches Führungselement (4) insbesondere in Gestalt einer Führungsschiene oder Führungsleiste aufweist, wobei das mindestens eine seitliche Führungselement (4) einen vorzugsweise biegesteifen erste Bereich (5) aufweist, in welchem das seitliche Führungselement (4) zumindest im Wesentlichen geradlinig verläuft, und einen zweiten Bereich (6) aufweist, in welchem das seitliche Führungselement (4) bogenförmig verläuft, wobei der zweite Bereich (6) des mindestens einen seitlichen Führungselements (4) zumindest bereichsweise aus einem derart flexiblen Material, insbesondere Kunststoffmaterial, gebildet ist, das zumindest bereichs-oder abschnittsweise eine Krümmung und/oder Krümmungsänderung der Bogenform des zweiten Bereichs (6) vorzugsweise reversibel und insbesondere zumindest über einen vorab festgelegten oder festlegbaren Bereich variabel einstellbar ist; wobei vorzugsweise das mindestens eine seitliche Führungselement (4) einen insbesondere biegesteifen dritten Bereich (7) aufweist, wobei der zweite Bereich (6) des seitlichen Führungselements (4) zwischen dem ersten und dem dritten Bereich (5, 7) des seitlichen Führungselements (4) angeordnet ist, wobei der erste und/oder dritte Bereich (5, 7) des seitlichen Führungselements (4) zumindest bereichs- oder abschnittsweise relativ zu der Fördereinrichtung (3) und senkrecht zu der Transportrichtung (2) gesehen verstellbar sind/ist; und
- zumindest bereichs- oder abschnittsweises Verstellen des ersten und/oder dritten Bereichs (5, 7) des mindestens einen seitlichen Führungselements (4) der Vorrichtung (14) relativ zu der Fördereinrichtung (3) und senkrecht zu der Transportrichtung (2) gesehen derart, dass zumindest bereichs- oder abschnittsweise eine Längsneigung, eine Krümmung und/oder eine Krümmungsänderung mindestens eines Kurvenbereichs oder mindestens eines gekrümmten oder bogenförmigen Bereichs der Transportstrecke (1) und/oder zumindest bereichs- oder abschnittsweise eine senkrecht zur Transportrichtung (2) gesehene, zur Förderung der Produkte, Gebinde und/oder Verpackungseinheiten effektive Breite der Fördereinrichtung (3) eingestellt wird.

8. Verfahren nach Anspruch 7,
wobei ein Endbereich des ersten Bereichs (5) des seitlichen Führungselements (4) mit einem Endbereich des zweiten Bereichs (6) des seitlichen Führungselements (4) derart verbunden ist, dass zumindest bedarfsweise eine geradlinige Bewegung zwischen dem Endbereich des ersten Bereichs (5) und dem Endbereich des zweiten Bereichs (6) möglich ist, wobei wahl- und/oder bedarfsweise eine Bewegung des Endbereichs des ersten Bereichs (5) und des Endbereichs des zweiten Bereichs (6) relativ zueinander blockierbar ist.

## Claims

1. A packaging machine for packaging and/or processing objects, having a transport section (1) for conveying products, containers, and/or packaging units in a transport direction (2), wherein the transport section (1) comprises a conveying device (3), in particular in the form of a conveyor belt, with preferably at least one propulsion means, wherein, in particular for routing the transport section (1), a width of the conveying device (3) that is perpendicular to the transport direction (2) and is effective for the conveyance of products, containers, and/or packaging units is preferably variably settable, at least in regions or in sections and in particular at least over a predefined or definable range, wherein the transport section (1) is associated with at least one lateral guide element (4), in particular in the form of a guide rail or guide strip, which is adjustable at least in regions relative to the conveying device (3) and perpendicular to the transport direction (2) for varying the width of the conveying device (3) that is effective for conveying the products, containers, and/or packaging units, wherein the at least one lateral guide element (4) comprises a preferably flexurally rigid first region (5) in which the lateral guide element (4) extends at least substantially rectilinearly and a second region (6) in which the lateral guide element (4) extends arcuately, wherein the second region (6) of the lateral guide element (4) consists at least in regions of a flexible material, in particular a plastic material, such that, at least in regions or in sections, a curvature and/or curvature change of the arcuate shape of the second region (6) of the lateral guide element (4) is preferably reversible and in particular is variably settable at least over a predefined or definable range,
wherein
a bearing (8) is provided between the first region (5) and the second region (6) of the at least one lateral guide element (4) for mechanically connecting the two regions (5, 6), **characterized in that** the bearing (8) is designed as a sliding or linear bearing and is configured so as to guide, at least in regions, a rectilinear movement between an end region of the first region (5) and an end region of the second region (6) of the lateral guide element (4) in the longitudinal direction of the lateral guide element (4), and wherein a locking device (9) is associated with the bearing (8) for selective and/or as needed blocking of a movement of the end region of the first region (5) and the end region of the second region (6) relative to one another.

2. The packaging machine according to claim 1,
wherein the transport section (1) preferably extends at least substantially horizontally, and wherein the transport section (1) has at least one curved region or at least one bent or arcuate region through which the products, containers, and/or packaging units are diverted and/or deflected in the horizontal direction, wherein, in particular for routing the transport section (1), at least in certain regions or portions a longitudinal inclination, a curvature, and/or a change of curvature of the at least one curved region or of the at least one bent or arcuate region of the transport section (1) are/is preferably variably adjustable, in particular at least over a defined or definable region.

3. The packaging machine according to claim 1 or 2,
wherein the at least one lateral guide element (4) has a preferably flexurally rigid third region (7), wherein the second region (6) of the lateral guide element (4) is arranged between the first and the third region (5, 7) of the lateral guide element (4).

4. The packaging machine according to one of claims 1 to 3 and in particular according to claim 3, wherein the first and/or third region (5, 7) of the lateral guide element (4) are/is assigned at least one adjusting device (11) via which, at least in certain regions or portions, the first and/or third region (5, 7) are/is adjustable relative to the conveying device (3) and when viewed perpendicularly to the transport direction (2).

5. The packaging machine according to claim 3 or 4,
wherein an end region of the second region (6) is fixedly connected to an end region of the third region (7).

6. The packaging machine according to one of claims 1 to 5, wherein the transport section (1) is assigned two mutually opposite lateral guide elements (4) which, at least in certain regions, in particular independently of one another, are adjustable relative to the conveying device (3) and perpendicularly to the transport direction (2) for varying the effective width of the conveying device (3) for conveying the products, containers, and/or packaging units.

7. A method for routing a transport section (1) of a packaging machine according to one of the claims 1 to 6, wherein the method comprises the following method steps:
- providing an apparatus (14) for routing a transport section (1) of a packaging machine, wherein the transport section (1) comprises a conveying device (3), in particular in the form of a conveyor belt, for conveying products, containers, and/or packaging units in a transport direction (2), and wherein the apparatus (14) comprises at least one lateral guide element (4), in particular in the form of a guide rail or guide strip, wherein the at least one lateral guide element (4) comprises a preferably flexurally rigid first region (5) in which the lateral guide element (4) extends at least substantially rectilinearly and a second region (6) in which the lateral guide element (4) extends arcuately, wherein the second region (6) of the lateral guide element (4) consists at least in regions of a flexible material, in particular a plastic material, such that, at least in regions or in sections, a curvature and/or curvature change of the arcuate shape of the second region (6) is preferably reversible and in particular is variably adjustable at least over a predefined or definable range; wherein preferably the at least one lateral guide element (4) comprises an in particular flexurally rigid third region (7), wherein the second region (6) of the lateral guide element (4) is arranged between the first and the third region (5, 7) of the lateral guide element (4), wherein the first and/or third region (5, 7) of the lateral guide element (4) is/are adjustable at least in regions or in sections relative to the conveying device (3) and perpendicular to the transport direction (2); and
- adjusting, at least in certain regions or portions, the first and/or third region (5, 7) of the at least one lateral guide element (4) of the apparatus (14) relative to the conveying device (3) and perpendicularly to the transport direction (2) in such a way that, at least in certain regions or portions, a longitudinal inclination, a curvature and/or a change or curvature of at least one curved region or of at least one bent or arcuate region of the transport section (1) is/are set and/or, at least in certain regions or portions, an effective width of the conveying device (3), when viewed perpendicularly to the transport direction (2), for conveying the products, containers, and/or packaging units is set.

8. The method according to claim 7,
wherein an end region of the first region (5) of the lateral guide element (4) is connected to an end region of the second region (6) of the lateral guide element (4) in such a way that, at least as needed, a rectilinear movement between the end region of the first region (5) and the end region of the second region (6) is possible, wherein, selectively and/or as needed, a movement of the end region of the first region (5) and of the end region of the second region (6) relative to one another is blockable.

## Revendications

1. Machine d'emballage pour l'emballage et/ou le traitement d'objets ayant une section de transport (1) pour le transport de produits, conteneurs, et/ou unités d'emballage dans une direction de transport (2), dans lequel la section de transport (1) comprend un dispositif de transport (3), en particulier sous la forme d'une bande transporteuse, avec de préférence au moins un moyen de propulsion, dans lequel, en particulier pour l'acheminement de la section de transport (1), une largeur du dispositif de transport (3) qui est perpendiculaire à la direction de transport (2) et est efficace pour le transport de produits, de conteneurs, et/ou d'unités d'emballage est de préférence réglable de manière variable, au moins par zones ou par sections et en particulier au moins sur une plage prédéfinie ou définissable, dans lequel la section de transport (1) est associée à au moins un élément de guidage latéral (4), en particulier sous la forme d'un rail de guidage ou d'une bande de guidage, qui est réglable au moins par zones par rapport au dispositif de transport (3) et perpendiculaire à la direction de transport (2) pour la variation de la largeur du dispositif de transport (3) qui est efficace pour le transport des produits, conteneurs, et/ou unités d'emballage, dans lequel l'au moins un élément de guidage latéral (4) comprend une première zone (5) de préférence rigide en flexion dans laquelle l'élément de guidage latéral (4) s'étend au moins sensiblement de manière rectiligne et une deuxième zone (6) dans laquelle l'élément de guidage latéral (4) s'étend de manière arquée, dans lequel la deuxième zone (6) de l'élément de guidage latéral (4) est constituée au moins dans des zones d'un matériau flexible, en particulier une matière plastique, de sorte que, au moins dans des zones ou des sections, une courbure et/ou un changement de courbure de la forme arquée de la deuxième zone (6) de l'élément de guidage latéral (4) est de préférence réversible et en particulier peut être réglé de manière variable au moins sur une plage prédéfinie ou définissable,
dans laquelle
un palier (8) est fourni entre la première zone (5) et la deuxième zone (6) de l'au moins un élément de guidage latéral (4) pour la liaison mécanique des deux zones (5, 6), **caractérisé en ce que** le palier (8) est conçu comme un palier lisse ou linéaire et est configuré de manière à guider, au moins dans des zones, un mouvement rectiligne entre une zone d'extrémité de la première zone (5) et une zone d'extrémité de la deuxième zone (6) de l'élément de guidage latéral (4) dans la direction longitudinale de l'élément de guidage latéral (4), et dans lequel un dispositif de verrouillage (9) est associé au palier (8) pour le blocage sélectif et/ou si nécessaire d'un déplacement de la zone d'extrémité de la première zone (5) et de la zone d'extrémité de la deuxième zone (6) l'une par rapport à l'autre.

2. Machine d'emballage selon la revendication 1,
dans laquelle la section de transport (1) s'étend de préférence au moins sensiblement horizontalement, et dans lequel la section de transport (1) a au moins une zone incurvée ou au moins une zone courbée ou arquée à travers laquelle les produits, conteneurs, et/ou unités d'emballage sont détournées et/ou déviées dans la direction horizontale, dans lequel, en particulier pour l'acheminement de la section de transport (1), au moins dans certaines zones ou parties une inclinaison longitudinale, une courbure, et/ou un changement de courbure de l'au moins une zone incurvée ou de l'au moins une zone courbée ou arquée de la section de transport (1) est/sont de préférence réglables de manière variable, en particulier au moins sur une zone définie ou définissable.

3. Machine d'emballage selon la revendication 1 ou 2,
dans lequel l'au moins un élément de guidage latéral (4) présente une troisième zone (7) de préférence rigide en flexion, dans lequel la deuxième zone (6) de l'élément de guidage latéral (4) est agencée entre la première et la troisième zone (5, 7) de l'élément de guidage latéral (4).

4. Machine d'emballage selon l'une quelconque des revendications 1 à 3, en particulier selon la revendication 3, dans laquelle la première et/ou la troisième zone (5, 7) de l'élément de guidage latéral (4) est/sont attribuées(s) à au moins un dispositif de réglage (11) via lequel, au moins dans certaines zones ou parties, la première et/ou la troisième zone (5, 7) sont réglables par rapport au dispositif de transport (3) et lorsqu'elles sont vues perpendiculairement à la direction de transport (2).

5. Machine d'emballage selon la revendication 3 ou 4,
dans lequel une zone d'extrémité de la deuxième zone (6) est reliée de manière fixe à une zone d'extrémité de la troisième zone (7).

6. Machine d'emballage selon l'une quelconque des revendications 1 à 5,
dans laquelle la section de transport (1) est attribuée à deux éléments de guidage latéraux (4) mutuellement opposés qui, au moins dans certaines zones, en particulier indépendamment l'un de l'autre, sont réglables par rapport au dispositif de transport (3) et perpendiculairement à la direction de transport (2) pour la variation de la largeur efficace du dispositif de transport (3) pour le transport des produits, conteneurs et/ou unités d'emballage.

7. Procédé d'acheminement d'une section de transport (1) d'une machine d'emballage selon l'une quelconque des revendications 1 à 6, dans lequel le procédé comprend les étapes de procédé suivantes :
- la fourniture d'un appareil (14) pour l'acheminement d'une section de transport (1) d'une machine d'emballage, dans lequel la section de transport (1) comprend un dispositif de transport (3), en particulier sous la forme d'une bande transporteuse, pour le transport de produits, conteneurs, et/ou unités d'emballage dans une direction de transport (2), et dans lequel l'appareil (14) comprend au moins un élément de guidage latéral (4), en particulier sous la forme d'un rail de guidage ou d'une bande de guidage, dans lequel l'au moins un élément de guidage latéral (4) comprend une première zone (5) de préférence rigide en flexion dans laquelle l'élément de guidage latéral (4) s'étend au moins sensiblement de manière rectiligne et une deuxième zone (6) dans laquelle l'élément de guidage latéral (4) s'étend de manière arquée, dans lequel la deuxième zone (6) de l'élément de guidage latéral (4) est constituée au moins dans des zones d'un matériau flexible, en particulier une matière plastique, de sorte que, au moins dans des zones ou des sections, une courbure et/ou un changement de courbure de la forme arquée de la deuxième zone (6) est de préférence réversible et peut notamment être réglé de manière variable au moins sur une plage prédéfinie ou définissable, dans lequel de préférence l'au moins un élément de guidage latéral (4) comprend une troisième zone (7) notamment rigide en flexion, dans lequel la deuxième zone (6) de l'élément de guidage latéral (4) est agencée entre la première et la troisième zone (5, 7) de l'élément de guidage latéral (4), dans lequel la première et/ou la troisième zone (5, 7) de l'élément de guidage latéral (4) est/sont réglable(s) au moins par zones ou par sections par rapport au dispositif de transport (3) et perpendiculairement à la direction de transport (2) ; et
- l'ajustement, au moins dans certaines zones ou parties, de la première et/ou de la troisième zone (5, 7) de l'au moins un élément de guidage latéral (4) du dispositif (14) par rapport au dispositif de transport (3) et perpendiculairement à la direction de transport (2) de telle sorte que, au moins dans certaines zones ou parties, une inclinaison longitudinale, une courbure et/ou un changement ou une courbure d'au moins une zone incurvée ou d'au moins une zone courbée ou arquée de la section de transport (1) est/sont réglés et/ou, au moins dans certaines zones ou parties, une largeur effective du dispositif de transport (3), lorsqu'il est vu perpendiculairement à la direction de transport (2), pour le transport des produits, conteneurs, et/ou unités d'emballage est définie.

8. Procédé selon la revendication 7,
dans lequel une zone d'extrémité de la première zone (5) de l'élément de guidage latéral (4) est reliée à une zone d'extrémité de la deuxième zone (6) de l'élément de guidage latéral (4) de telle sorte que, au moins en cas de besoin, un déplacement rectiligne entre la zone d'extrémité de la première zone (5) et la zone d'extrémité de la deuxième zone (6) est possible, dans lequel, de manière sélective et/ou en cas de besoin, un déplacement de la zone d'extrémité de la première zone (5) et de la zone d'extrémité de la deuxième zone (6) l'une par rapport à l'autre peut être bloqué.
